# EUROPÄISCHE PATENTSCHRIFT

(11) **EP 2 235 948 B1**
(45) Veröffentlichungstag und Bekanntmachung des Hinweises auf die Patenterteilung: **09.01.2013**
(21) Anmeldenummer: 08871123.9
(22) Anmeldetag: 11.11.2008
(51) Int. Cl.: G08B 13/196, H04N 7/18

(54) **ÜBERWACHUNGSMODUL FÜR EIN VIDEOÜBERWACHUNGSSYSTEM, VERFAHREN ZUR ZUSTANDSÜBERWACHUNG EINES ÜBERWACHUNGSBEREICHS SOWIE COMPUTERPROGRAMM**
MONITORING MODULE FOR A VIDEO MONITORING SYSTEM, METHOD FOR MONITORING THE STATE OF A MONITORED AREA AND COMPUTER PROGRAM
MODULE DE SURVEILLANCE POUR UN SYSTÈME DE VIDÉOSURVEILLANCE, PROCÉDÉ DE SURVEILLANCE D'ÉTAT D'UNE ZONE DE SURVEILLANCE AINSI QUE PROGRAMME INFORMATIQUE

(30) Priorität: 15.01.2008 DE 102008004369
(43) Veröffentlichungstag der Anmeldung: 06.10.2010
(73) Patentinhaber: Robert Bosch GmbH, 70442 Stuttgart (DE)
(72) Erfinder: MERKEL, Marcel, CH-8051 Zürich (CH); BOLTZ, Marco, 31134 Hildesheim (DE); KOENIG, Matthias, 31137 Hildesheim (DE)
(86) Internationale Anmeldenummer: PCT/EP2008/065258
(87) Internationale Veröffentlichungsnummer: WO 2009/089933

(56) Entgegenhaltungen:
- EP-A- 0 967 584
- US-A1- 2004 233 283

## Beschreibung

### Stand der Technik

Die Erfindung betrifft ein Überwachungsmodul für ein Videoüberwachungssystem, wobei das Überwachungsmodul mit mindestens einer Überwachungskamera datentechnisch koppelbar und/oder gekoppelt ist, wobei die mindestens eine Überwachungskamera auf einen Überwachungsbereich gerichtet ist und der Überwachungsbereich als Überwachungsszene darstellbar ist bzw. dargestellt wird, welche bewegte Vordergrundobjekte und einen Szenenhintergrund umfasst und wobei das Überwachungsmodul zur Analyse der Überwachungsszene und zur Ausgabe eines Signals auf Basis der Analyse ausgebildet ist. Die Erfindung betrifft des Weiteren ein Verfahren zur Kontrolle eines Überwachungsbereichs sowie ein Computerprogramm.

Videoüberwachungssysteme umfassen üblicherweise eine oder mehrere Überwachungskameras, welche auf relevante Überwachungsbereiche, wie zum Beispiel Kreuzungen, Parkplätze, Fabrikhallen, etc. gerichtet sind, wobei die durch die Überwachungskamera (S) aufgenommenen Bilddatenströme oftmals in einer Überwachungszentrale zusammengeführt werden. In dieser Überwachungszentrale werden die Bilddatenströme dann üblicherweise durch Überwachungspersonal oder auch automatisiert mittels Bildverarbeitungsalgorithmen ausgewertet.

Bei der automatisierten Auswertung der Bilddatenströme sind Verfahren bekannt, welche bewegte Objekte in dem Überwachungsbereich detektieren, verfolgen und auf Basis der Detektion bzw. Verfolgung Auswertungen durchführen.

Beispielsweise offenbart die Druckschrift DE 199 04 093 A1, welche wohl den nächstkommenden Stand der Technik bildet, ein Verfahren zur automatischen Erfassung von Parkplatzbelegungen einer Parkfläche. Bei diesem Verfahren wird vorgeschlagen, zumindest die Zu- und Abfahrtbereiche mindestens einer Zone der Parkfläche mit einer Videokamera zu überwachen, wobei durch Untersuchung der Bewegungsrichtung von erfassten Fahrzeugen mittels Auswertung der entsprechenden Bildersequenzen der aktuelle Belegungszustand des Parkplatzes ermittelt wird.

Weiterhin offenbart das Dokument US 2004/0233283 ein Video überwachungssystem zur Detektion von Änderungen im Bildhintergrund.

### Offenbarung der Erfindung

Im Rahmen der Erfindung wird ein Überwachungsmodul mit den Merkmalen des Anspruchs 1, ein Verfahren zur Kontrolle eines Überwachungsbereichs mit den Merkmalen des Anspruchs 10 sowie ein Computerprogramm zur Durchführung des Verfahrens mit den Merkmalen des Anspruchs 12 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Überwachungsmodul, welches für ein Videoüberwachungssystem geeignet und/oder ausgebildet ist, vorgeschlagen. Das Videoüberwachungssystem umfasst bevorzugt mindestens eine Überwachungskamera und eine zentrale Auswerteeinheit wobei das Überwachungsmodul ein Teil der zentralen Auswertungseinheit bildet. Die zentrale Auswertungseinheit kann zum einen zentral für eine Mehrzahl von Überwachungskameras positioniert sein, alternativ auch als eine Datenverarbeitungseinheit in der mindestens einen Überwachungskamera ausgebildet sein. Das Überwachungsmodul ist mit der mindestens einen Überwachungskamera datentechnisch gekoppelt bzw. koppelbar, so dass das Überwachungsmodul Bilddatenströme der Überwachungskamera aufnehmen und auswerten kann.

Die mindestens eine Überwachungskamera ist auf einen Überwachungsbereich, wie zum Beispiel ein Gebäude, ein Gebäudekomplex, Gänge, Zimmer, öffentliche Plätze, Straßen, Kreuzungen, etc. gerichtet. Der Überwachungsbereich kann als ein zusammenhängender Bereich, jedoch auch als mehrere Einzelbereiche ausgebildet sein. Der real ausgebildete Überwachungsbereich wird durch die mindestens eine Überwachungskamera als eine Überwachungsszene dargestellt bzw. ist entsprechend darstellbar, wobei die Überwachungsszene zum Zwecke der Definition in bewegte Vordergrundobjekte und einen Szenenhintergrund unterteilt wird. Die bewegten Vordergrundobjekte sind beispielsweise Passanten, Personen, Fahrzeuge etc., der Szenenhintergrund wird durch den Untergrund sowie - wie nachfolgend noch erläutert wird - durch stationäre und/oder quasi-stationäre Objekte gebildet. Der Begriff des Szenenhintergrunds ist bevorzugt so zu verstehen, dass dieser auch Objekte oder Bildbereiche umfasst, welche perspektivisch vor den bewegten Vordergrundobjekten angeordnet sind.

Das Überwachungsmodul ist zur Auswertung der Überwachungsszene und zur Ausgabe eines Signals auf Basis der Auswertung ausgebildet. Insbesondere erfolgt die Auswertung mittels Bildverarbeitungsalgorithmen bzw. digitaler Bildverarbeitung der mit der mindestens einen Überwachungskamera aufgenommenen Bilddatenströme.

Im Rahmen der Erfindung wird vorgeschlagen, dass das Überwachungsmodul zur Analyse des Szenenhintergrunds auf Abweichungen von vorgegebenen Grundzuständen ausgebildet ist.

In Abgrenzung zum bekannten Stand der Technik wird somit vorgeschlagen, die Überwachungsaktivität des Videoüberwachungssystems auf den Szenenhintergrund zu konzentrieren und dort Abweichungen von vorgegebenen Grundzuständen, auch als Soll-Zustände definierbar, auszuwerten. Bevorzugt werden der bauliche Zustand und/oder der Funktionszustand von Funktionskomponenten und/oder Bauelementen des Überwachungsbereichs optisch überwacht.

Eine Überlegung der Erfindung ist es, mit dem erfindungsgemäßen Überwachungsmodul nicht die Aktivitäten der bewegten Vordergrundobjekte, also der Passanten oder Personen, Autos, etc., zu untersuchen, sondern Änderungen oder Zustände des Szenenhintergrund, also beispielsweise einer baulichen Einrichtung mit dessen Funktionskomponenten, zu überwachen. Vorzugsweise ist das Überwachungsmodul ausgebildet, die bewegten Vordergrundobjekte zu ignorieren, beispielsweise indem die Vordergrundobjekte ausgefiltert und/oder aussortiert werden.

Auf Basis der Erfindung ist es beispielsweise möglich Sicherheitssysteme für Einrichtungen und Gebäude, welche den Zustand der Einrichtungen bzw. der Gebäude mittels Schalterkontakten, Rauchmeldern, Wassermeldern, Lichtschranken, etc. überwachen, durch ein Videoüberwachungssystem mit dem erfindungsgemäßen

Überwachungsmodul zu substituieren. Bekanntermaßen benötigen die nicht-videobasierten Sicherheitssysteme ein umfangreiches Netzwerk von Schaltkabeln, welche am besten vor der Errichtung der Einrichtung geplant sein müssen. Eine nachträgliche Installation führt dagegen zu sehr hohen Installationskosten und umfangreichen Umbaumaßnahmen. Demgegenüber erlaubt die Substitution eines nicht-videobasierten Sicherheitssystems durch ein Videoüberwachungssystem mit dem erfindungsgemäßen Überwachungsmodul eine einfache Installation, da zum Beispiel für die Überwachung einer Mehrzahl von Fenstern auf deren Öffnungszustand nur eine einzige Überwachungskamera mit einem einzigen Kabel installiert werden muss. Ebenso kann beispielsweise eine gesamte Front eines Gebäudes mit einer Vielzahl von Fenstern und Türen mit einer einzigen Überwachungskamera effektiv überwacht werden.

Bei einer bevorzugten Ausführungsform der Erfindung ist der Szenenhintergrund aus stationären und quasi-stationären Bereichen und/oder Objekten gebildet, wobei das Überwachungsmodul zur Analyse der stationären und/oder quasi-stationären Bereich bzw. Objekte ausgebildet ist.

Ein stationärer Bereich bzw. Objekt weist vorzugsweise eine Aufenthaltsdauer an der gleichen Bildposition von mehr als einem Tag, vorzugsweise von mehr als einer Woche, insbesondere von mehr als einem Monat und im Speziellen von mehr als einem Jahr auf. Derartige stationäre Bereiche bzw. Objekte werden beispielsweise durch Türen, Fenster, Möbel, Bäume, Häuser, Durchgänge, etc. gebildet.

Quasi-stationäre Bereiche bzw. Objekte verbleiben vorzugsweise zumindest mehr als eine Stunde, vorzugsweise mehr als sechs Stunden und insbesondere mehr als 12 Stunden an der gleichen Position. Alternativ hierzu kann die Verweildauer auch per Benutzereingabe einstellbar sein. Quasi-stationäre Bereich und/oder Objekte können auch in Bereichen vorliegen, welche per Benutzerdefinition für einen definierten Zeitraum unbeweglich und/oder unverändert bleiben sollen. Beispielsweise werden Bereiche und/oder Objekte in einem abgesperrten Raum oder in einem gesperrten Bereich möglicherweise per Definition zu quasi-stationären Bereichen bzw. Objekten.

Bei einer optionalen Weiterbildung der Erfindung ist das Überwachungsmodul für eine manuelle und/oder automatische Vorgabe der Grundzustände der Überwachungsszene und/oder der stationären und/oder quasi-stationären Bereiche bzw. Objekte ausgebildet.

Für den Fall einer manuellen Vorgabe ist das Überwachungsmodul mit einer Mensch-Maschinen-Schnittstelle gekoppelt, durch die ein Benutzer Grundzustände und/oder Bereiche bzw. Objekte für die Auswertung wählen kann. Beispielsweise ist es möglich, dass der Benutzer stationäre Bereiche bzw. Objekte auswählt und deren aktuellen Zustand als Grundzustand definiert. Alternativ hierzu kann der Benutzer einen Bereich bzw. ein Objekt auswählen und das Überwachungsmodul bietet dem Benutzer verschiedene mögliche Betriebszustände an. In der Fortführung des Beispiels wählt der Benutzer Türen oder Fenster in einer Überwachungsszene aus und aktiviert diese für die Auswertung. Alternativ oder ergänzend kann der Benutzer andere Objekte oder Bereiche auswählen und zur Auswertung aktivieren, wie nachfolgend noch erläutert wird.

Bei einer ersten möglichen Ausführungsform der Erfindung betrifft die Abweichung des vorgegebenen Grundzustands eine Änderung eines ersten regulären Betriebszustands eines der Bereiche und/oder eines der Objekte in dem Szenenhintergrund in einen zweiten regulären Betriebszustand. Diese Ausführungsform setzt voraus, dass der gewählte Bereich bzw. das gewählte Objekt mindestens zwei reguläre Betriebszustände einnehmen kann. Bevorzugt werden als reguläre Betriebszustände Zustände der Bereiche bzw. Objekte angesehen, welche diese im Rahmen der normalen Benutzung einnehmen können. Beispielsweise kann eine Tür oder ein Fenster als ein erster Betriebszustand geschlossen sein, als ein zweiter Betriebszustand gekippt und als ein dritter Betriebszustand geschwenkt offen sein. Prinzipiell ist es auch möglich beispielsweise eine Maschine oder eine andere Vorrichtung optisch auf die Ausgabe von optischen Signalen zu überwachen, so kann beispielsweise ein erster Betriebszustand durch ein grünes Signallicht und ein zweiter Betriebszustand durch ein anders farbiges Signallicht gekennzeichnet sein.

Im Rahmen der Vorgabe der Grundzustände ist es dabei möglich, eine beliebige Kombination der Grundzustände der diversen Bereiche bzw. Objekte zu definieren. So kann beispielsweise definiert werden, dass alle Fenster oder Türen einer Hausfront geöffnet bzw. geschlossen sein sollen, oder, dass nur eine bestimmte Auswahl der Fenster bzw. Türen geöffnet und ein anderer Teil geschlossen sein muss.

Bei einer weiteren Ausführungsform der Erfindung betrifft die Abweichung des vorgegebenen Grundzustands eine Änderung eines regulären Zustands eines der Bereiche und/oder eines der Objekte in dem Szenenhintergrund in einen irregulären Zustand. Der irreguläre Zustand betrifft dabei einen mittels Verbotsregel definierten Zustand. Eine mögliche Verbotsregel mag die Blockierung von Fluchtwegen sein, wobei der Fluchtweg als stationärer Bereich in dem Szenenhintergrund auf die dauerhafte Blockierung mit weiteren Objekten überwacht wird. Eine andere Anwendung kann die Überwachung von Objekten auf ein anormales Verhalten sein, wie zum Beispiel eine starke Bewegung von Bäumen, welche auf einen drohenden Sturm hinweist, eine Detektion von einem Wassereinbruch in einem stationären Bereich oder die Detektion von zerstörten oder demolierten Objekten.

Bei einer bevorzugten Realisierung wird die Untersuchung der Abweichung des Grundzustands über eine Inhaltsanalyse des Objekts und/oder des Bereichs in dem Szenenhintergrund umgesetzt. Beispielsweise können Klassifikationseinrichtungen trainiert werden, um zwischen einem ersten und einem zweiten Betriebszustand eines Objekts, wie zum Beispiel zwischen einem offenen und einem geschlossenen Fenster oder einer Tür zu unterscheiden. Weitere Inhaltsanalysen können die plötzliche Helligkeitsänderung eines Objekts bzw. Bereichs betreffen, wobei Licht detektiert wird, welches unzulässigerweise in Korridoren oder beispielsweise auch in Autos als quasistationäre Objekte angelassen ist.

Bei einer anderen oder ergänzenden Realisierung der Erfindung erfolgt die Untersuchung der Abweichung des Grundzustands über eine Positionsbestimmung des Objekts und/oder des Bereichs. Für den Fall, dass für ein stationäres oder quasi-stationäres Objekt bzw. ein entsprechender Bereich eine signifikante Positionsänderung durchläuft, wird dieses ebenfalls als Zustandsänderung interpretiert. Eine derartige Positionsänderung kann beispielsweise bei dem Umknicken eines Baums oder dem Umfallen eines Zaunes registriert werden.

Bei einer weiteren möglichen, ergänzenden Realisierung der Erfindung erfolgt die Analyse der Abweichung des Grundzustands über das zeitliche und/oder statistische Verhalten des Objekts und/oder des Bereichs. Durch diese Untersuchungsmethode ist beispielsweise eine Sturmvorhersage möglich, da sich in dem Überwachungsbereich befindliche Bäume vor einem Sturm aufgrund des starken Windes sehr stark bewegen und dadurch sehr hohe Bildfluktuationen in dem Szenenhintergrund bzw. an dem stationären Objekt messtechnisch erfassbar sind.

Bei einer bevorzugten Konkretisierung wird der Betriebszustand und/oder die Abweichung einer der folgenden Situationen mittels des Überwachungsmoduls ausgewertet: Zustandsänderung von Fenstern oder Türen, insbesondere hinsichtlich des Offen-Geschlossen-Zustands; Detektion von versperrten Fluchtwegen, insbesondere die Detektion von Objekten in markierten Bereichen; Detektion von Falschlicht, insbesondere in Bereichen des Szenenhintergrunds, welche als Grundzustand dunkel oder lichtlos angegeben sind; Sturmwarnung, insbesondere durch Auswertung der zeitlichen und/oder statistischen Fluktuationen der Bilder der Überwachungskamera; Wassereinbruchwarnung, insbesondere durch Auswertung des optischen Flusses.

Ein weiterer Gegenstand der Erfindung betrifft ein Verfahren zur Zustandsüberwachung eines Überwachungsbereichs, insbesondere eines Gebäudes oder Gebäudekomplexes, mit den Merkmalen des Anspruchs 10.

Nachfolgende Anwendungsfälle der erfindungsgemäßen Zustandsüberwachung sind ebenfalls möglich:
Gebäude- und/oder Bereichsüberwachung im Rahmen eines Facility Management, wobei die zu überwachenden Objekte Bestandteile des Gebäudes und/oder des Bereichs bilden.
Objektüberwachung, z.B. in einem Museum, wobei die Positionen der Objekte, z.B. Kunstobjekte in dem Museum, den zu überwachenden Grundzustand bilden.
Zustandsüberwachung in der Automatisierung, wobei beispielsweise in einem automatischen Warenlager die Regale als Objekte auf den Grundzustand "gefüllt" oder andere Grundzustände überwacht werden.

Bei einer bevorzugten Ausführungsform wird das Verfahren mit dem soeben beschriebenen Überwachungsmodul durchgeführt, wobei der Überwachungsbereich als Überwachungsszene darstellbar ist bzw. dargestellt wird, welche bewegte Vordergrundobjekte und ein Szenenhintergrund umfasst, wobei Grundzustände des Szenenhintergrunds oder Abschnitte davon vorgegeben werden und wobei Änderungen oder Abweichungen der vorgegebenen Grundzustände ausgewertet werden und auf Basis der Auswertung ein Signal, insbesondere ein Hinweissignal an das Überwachungspersonal ausgegeben wird.

Ein letzter Gegenstand der Erfindung betrifft ein Computerprogramm mit den Merkmalen des Anspruchs 12.

### Kurze Beschreibung der Zeichnungen

Weitere Merkmale, Vorteile und Wirkungen der Erfindung ergeben sich aus der nachfolgenden Beschreibung bevorzugter Ausführungsbeispiele der Erfindung und den beigefügten Figuren. Dabei zeigen:
- Figur 1: eine Blockdarstellung ein Überwachungssystems mit einem Überwachungsmodul als ein Ausführungsbeispiel der Erfindung;
- Figur 2, 3, 4: beispielhafte Überwachungsszene zur Illustration des erfindungsgemäßen Verfahrens.

### Ausführungsform(en) der Erfindung

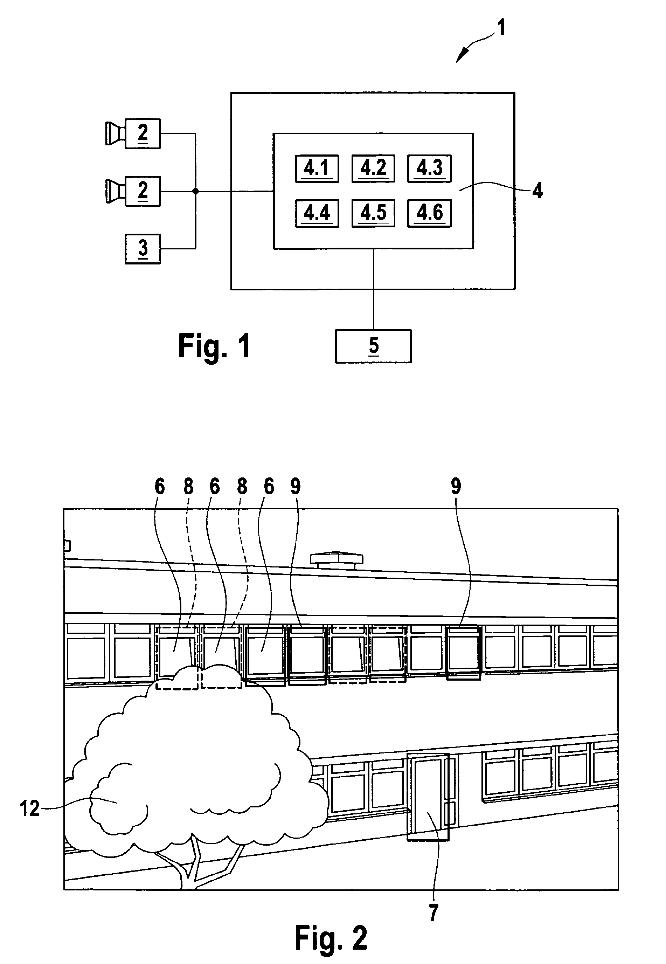

Die Figur 1 zeigt ein Videoüberwachungssystem 1, welches signaltechnisch mit einer Mehrzahl von Überwachungskameras 2 bzw. einer Speichervorrichtung 3 zur temporären oder dauerhaften Zwischenspeicherung von Bilddatenströmen der Überwachungskameras 2 ausgebildet ist. Die Überwachungskameras 2 sind auf einen oder mehrere Überwachungsbereiche gerichtet, wobei die Überwachungsbereiche durch die Überwachungskameras 2 als Überwachungsszenen abgebildet werden. Die abgebildeten Überwachungsszenen gliedern sich in bewegte Objekte, wie z.B. Personen, Passanten oder auch Fahrzeuge, und in unbewegte Objekte, welche den Szenenhintergrund bilden.

Die Bilddatenströme werden an das Überwachungssystem 1 übergeben und an ein Überwachungsmodul 4 weitergeleitet. Das Überwachungsmodul 4 umfasst eine Mehrzahl von selektiv aktivierbaren Überwachungsbausteinen 4.1, 4.2, 4.3, 4.4, 4.5 und 4.6, welche später ausführlich erläutert werden. Das Überwachungssystem 1 umfasst ferner eine Mensch-Maschinen-Schnittstelle 5, welches einem Benutzer ermöglicht, Parameter, Bedingungen oder Bereiche einzugeben und die Überwachungsbausteine 4.1 bis 4.6 zu aktivieren bzw. zu deaktivieren. Die Überwachungsbausteine 4.1, 4.2, 4.3, 4.4, 4.5 und 4.6 setzen die nachfolgenden Funktionen um:
Überwachungsbaustein 4.1:
   Überwachung von Betriebszuständen von Gebäude- und/oder Anlagenkomponenten

Der Überwachungsbaustein 4.1 stellt eine Substitutionslösung zur Überwachung von Gebäude- bzw. Anlagenkomponenten dar, welche üblicherweise durch Schaltkontakte oder dergleichen überwacht werden. Zur Initialisierung des Überwachungsbausteins 4.1 werden manuell und/oder automatisiert Überwachungsabschnitte in dem Überwachungsbereich definiert, welche Gebäude- bzw. Anlagenkomponenten zeigen, die verschiedene Betriebszustände einnehmen können. Derartige Betriebszustände beziehen sich beispielsweise auf einen Offen-Geschlossen-Zustand eines Fensters, einer Tür, eines Gatters, eines Tores, eines Schranks, einer Abdeckung oder eines anderen Funktionselements. Nach der Initialisierung ist der Überwachungsbaustein 4.1 unter Verwendung entsprechender Bildverarbeitungsalgorithmen, wie zum Beispiel Klassifikatoren, welche trainiert werden, um beispielsweise zwischen offenen und geschlossenen Betriebszuständen der Funktionselemente zu unterscheiden, in der Lage, den Betriebszustand des Überwachungsabschnitts automatisch zu detektieren.

Bei einer möglichen Ausgestaltung ist die Überwachungskamera 2 als eine PTZ (Pan-Tilt-Zoom-Kamera) ausgebildet, welche ausgebildet ist, durch entsprechende steuerbare Bewegung einen sehr großen Überwachungsbereich abzudecken. Bei einer möglichen Ausführungsform vergleicht der Überwachungsbaustein 4.1 den Zustand oder Betriebszustand z.B. einiger oder aller Türen bzw. Fenster mit einem vorgegebenen Grundzustand und gibt ein Hinweissignal aus, wenn der aktuelle Zustand dem vorgegebenen Grundzustand nicht entspricht. Der Grundzustand kann beispielsweise abhängig von einer Tageszeit (Tag-/Nachtumschaltung), Witterung (Schließen von Fenstern und Türen bei Regen oder Sturm) etc., sein.

Beispielsweise zeigt die Figur 2 ein Kamerabild einer Draufsicht auf ein Gebäude, welches eine Mehrzahl von Fenstern 6 und eine Tür 7 aufweist. Der Überwachungsbaustein 4.1 ist ausgebildet, um den Betriebszustand der Fenster 6 und Türen 7 zu erkennen. Zur Visualisierung sind alle geöffneten Fenster 6 und Türen 7 mit einem gestrichelten Rahmen 8 und alle geschlossenen Fenster bzw. Türen mit einem durchzogenen Rahmen 9 als Ergebnis einer automatisierten Detektion des Betriebszustands der Funktionselemente dargestellt. Bei einem Vergleich mit einem zuvor eingegebenen Grundzustand kann überprüft werden, ob die Fenster- bzw. Türstellung dem vorgegebenen Grundzustand entspricht.

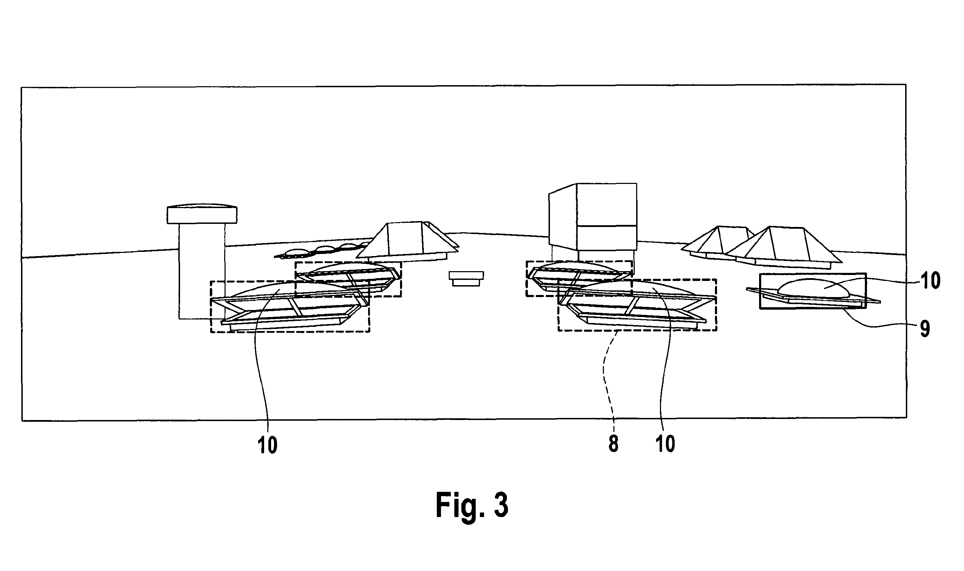

Die Figur 3 zeigt ein zweites Ausführungsbeispiel der Erfindung, wobei der Überwachungsbaustein 4.1 den Betriebszustand von Dachfenstern 10 auf den Offen-Geschlossen-Betriebszustand überprüft.

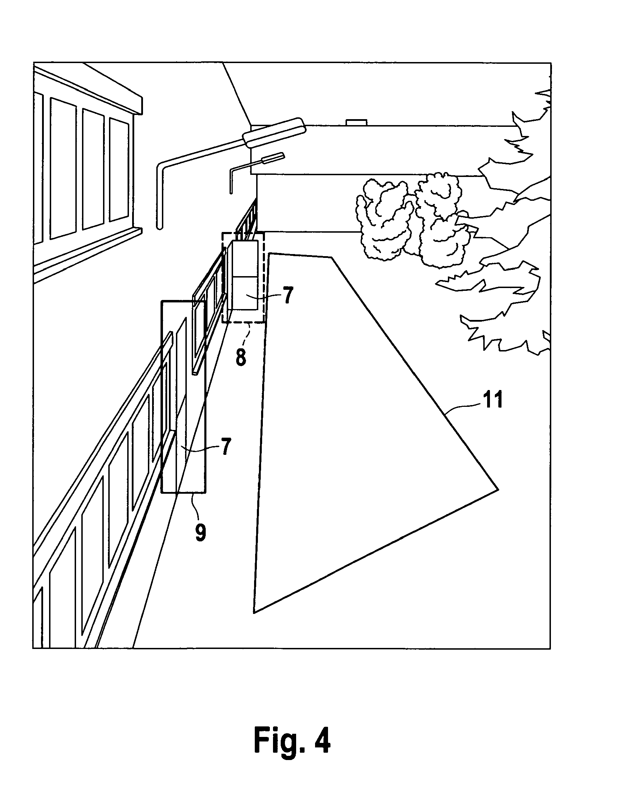

In der Figur 4, welche ein drittes Anwendungsbeispiel für den Überwachungsbaustein 4.1 zeigt, wird durch eine angepasste Positionierung der Überwachungskamera 2 die Detektion von geöffneten Türen 7 bzw. Fenstern 6 deutlich vereinfacht. Die Überwachungskamera 2 ist so angeordnet, dass die Türen in einem geschlossenen Zustand in oder im Wesentlichen in Flucht der Kameraperspektive und in einem geöffneten Zustand senkrecht bzw. im Wesentlichen senkrecht zu der Flucht der Kameraperspektive angeordnet sind.

### Überwachungsbaustein 4.2: Detektion von Hindernissen auf Sperrflächen und/oder - wegen

Der Überwachungsbaustein 4.2 ist zur Detektion von Hindernissen auf Sperrflächen bzw. Sperrwegen ausgebildet, wobei nach einem Einlernen der Sperrflächen bzw. -wegen blockierende Objekte beispielsweise durch einen Vergleich einer aktuellen Aufnahme des Überwachungsbereichs mit einer Referenzaufnahme des Überwachungsbereichs detektiert werden. Optional ergänzend werden unerwartete Objektbewegungen in diesem Bereich erkannt. Als eine derartige Sperrfläche kann beispielsweise der Weg 11 in der Figur 4 definiert werden, für den Fall, dass der Weg 11 als Feuerwehanfahrtszone stets frei bleiben muss.

### Überwachungsbaustein 4.3: Detektion von Lichtquellen

Der Überwachungsbaustein 4.3 erlaubt die Definition von Flächen, welche nicht beleuchtet werden sollen oder keine Eigenbeleuchtung aufweisen. Durch Überwachung auf lokale Helligkeiten können von dieser Regel abweichende abnormale Lichtquellen detektiert und ein Hinweis erzeugt werden.

### Überwachungsbaustein 4.4: Sturmwarner

Dieser Überwachungsbaustein 4.4 wertet die Bewegung von stationären Objekten, beispielsweise von Bäumen 12 (Figur 2), Zweigen oder Flaggen aus und untersucht deren zeitliches und/oder statistisches Verhalten. Auf Basis dieser Untersuchung können Schlechtwetterlagen oder Stürme erkannt werden, da die statistischen Schwankungen bzw. das zeitliche Verhalten eines im Sturm schwankenden Baums 12, Zweigs, Flagge und dergleichen ein deutlicher Indikator für starken Wind und somit für einen aufziehenden Sturm ist.

### Überwachungsbaustein 4.5: Detektion von Zerstörungen

Bei der Verwendung eines Szenenreferenzbildes als Grundzustand der Überwachungsszenen kann der Überwachungsbaustein 4.5 Abnormalitäten in der Überwachungsszene, wie zum Beispiel Zerstörung, insbesondere zusammengebrochene Zäune und Bäume detektieren. Als besonderer Vorteil ist zu sehen, dass ein derartiger Vergleich nicht unbedingt ein Inhaltsverständnis der Szene benötigt. Insbesondere detektiert der Überwachungsbaustein Abnormalitäten in der Szene, die nicht durch übliche Bewegungen identifiziert werden können. Auch bei dem Überwachungsbaustein 4.5 besteht die Möglichkeit, einen Klassifizierungsalgorithmus zu verwenden, um Objekte zu identifizieren und zu überwachen. Optional wird der Überwachungsbaustein 4.5 automatisch aktiviert, sobald der Überwachungsbaustein 4.4 eine Sturmmöglichkeit angezeigt hat.

### Überwachungsbaustein 4.6: Detektion von Elementarschäden

Elementarschäden, insbesondere Wassereinbruch oder Feuer, sind ebenfalls durch Bildverarbeitungsalgorithmen zu detektieren und können von dem Überwachungsmodul berichtet werden. Beispielsweise wird ein Wassereinbruch durch dessen optische Eigenheiten und insbesondere durch Auswertung des optischen Flusses ("optical flow") erkannt.

## Patentansprüche

1. Überwachungsmodul (4) für ein Videoüberwachungssystem (1),
wobei das Überwachungsmodul (4) mit mindestens einer Überwachungskamera (2) datentechnisch koppelbar und/oder gekoppelt ist,
wobei die mindestens eine Überwachungskamera (2) auf einen Überwachungsbereich gerichtet und der Überwachungsbereich als eine Überwachungsszene darstellbar ist bzw. dargestellt wird, welche bewegte Vordergrundobjekte und einen Szenenhintergrund umfasst bzw. umfassen kann,
und wobei das Überwachungsmodul (4) zur Analyse der Überwachungsszene und zur Ausgabe eines Signals auf Basis der Analyse ausgebildet ist,
**dadurch gekennzeichnet, dass**
die Ausgabe des Signals auf Basis der Analyse des Szenenhintergrunds auf Abweichungen von vorgegebenen Grundzuständen erfolgt,
wobei die Abweichung des vorgegebenen Grundzustands eine Änderung eines ersten regulären Betriebszustands (8) eines der Bereiche und/oder eines der Objekte (6,7) in dem Szenenhintergrund in einen zweiten regulären Betriebszustand (9) umfasst.

2. Überwachungsmodul (4) nach Anspruch 1, **dadurch gekennzeichnet, dass** der Szenenhintergrund aus stationären und quasi-stationären Bereichen und/oder Objekten (6,7) gebildet ist, wobei das Überwachungsmodul (4) zur Analyse der stationären und/oder der quasi-stationären Bereiche bzw. Objekte (6,7) ausgebildet ist.

3. Überwachungsmodul (4) nach Anspruch 1 oder 2, **dadurch gekennzeichnet, dass** das Überwachungsmodul (4) für eine manuelle (5) und/oder automatische Vorgabe der Grundzustände der Überwachungsszene und/oder der stationären und/oder quasi-stationären Bereiche bzw. Objekte ausgebildet ist.

4. Überwachungsmodul (4) nach einem der vorhergehenden Ansprüche, **dadurch gekennzeichnet, dass** die Abweichung des vorgegebenen Grundzustands eine Änderung eines regulären Zustandes eines der Bereiche und/oder eines der Objekte dem Szenenhintergrund in einen irregulären Zustand umfasst.

5. Überwachungsmodul (4) nach einem der vorhergehenden Ansprüche, **dadurch gekennzeichnet, dass** die Untersuchung der Abweichung des Grundzustands über eine Inhaltsanalyse des Objekts und/oder des Bereichs (6,7) erfolgt.

6. Überwachungsmodul (4) nach einem der vorhergehenden Ansprüche, **dadurch gekennzeichnet, dass** die Untersuchung der Abweichung des Grundzustands über eine Positionsbestimmung des Objekts und/oder des Bereichs (6,7) erfolgt.

7. Überwachungsmodul (4) nach einem der vorhergehenden Ansprüche, **dadurch gekennzeichnet, dass** die Untersuchung der Abweichung des Grundzustands über das zeitliche und/oder statistische Verhalten des Objekts und/oder des Bereichs (12) erfolgt.

8. Überwachungsmodul nach einem der vorhergehenden Ansprüche, **dadurch gekennzeichnet, dass** der Betriebszustand und/oder die Abweichung eine der folgenden Situationen betrifft:
- Zustandsänderung von Funktionselementen eines Gebäudes oder einer Einrichtung, insbesondere von Fenstern oder Türen (6,7);
- Existenz von Störobjekten auf Sperrbereichen (11) und/oder -flächen, insbesondere auf Fluchtwegen;
- Existenz von Lichtquellen in Sperrbereichen und/oder -flächen;
- Existenz von irregulären Zuständen von Bereichen, insbesondere zur Sturmwarnung, Zerstörungsdetektion und/oder Wassereinbruchswarnung.

9. Verfahren zur Kontrolle eines Überwachungsbereichs, insbesondere eines Gebäudes oder Gebäudekomplexes, mit einem Überwachungsmodul (4) eines Videoüberwachungssystem (1), wobei der Zustand des Überwachungsbereichs, insbesondere der bauliche Zustand und/oder der Funktionszustand von Funktionskomponenten und/oder Bauelementen des Überwachungsbereichs, optisch überwacht wird, **dadurch gekennzeichnet, dass** das Überwachungsmodul (4) nach einem der vorhergehenden Ansprüche ausgebildet ist.

10. Computerprogramm mit Programmcode-Mitteln, um alle Schritte des Verfahrens nach Anspruch 9 durchzuführen, wenn das Programm auf einem Computer und/oder einer Überwachungsmodul (4) von jedem Beliebigen der Ansprüche 1 bis 8 ausgeführt wird.

## Claims

1. Monitoring module (4) for a video monitoring system (1), wherein the monitoring module (4) can be coupled and/or is coupled to at least one monitoring camera (2) in a data-transmitting fashion, wherein the at least one monitoring camera (2) is directed to a monitoring region, and the monitoring region can be or is displayed as a monitored scene which comprises or can comprise moving foreground objects and a scene background
and wherein the monitoring module (4) is designed to analyze the monitored scene and to output a signal on the basis of the analysis,
**characterized in that**
the outputting of the signal is carried out on the basis of the analysis of the scene background with respect to deviations from predefined basic states,
wherein the deviation from the predefined basic state comprises a change in a first usual operating state (8) of one of the regions and/or of one of the objects (6, 7) in the scene background into a second usual operating state (9).

2. Monitoring module (4) according to Claim 1, **characterized in that** the scene background is formed from fixed and quasi-fixed regions and/or objects (6, 7), wherein the monitoring module (4) is designed to analyze the fixed and/or the quasi-fixed regions or objects (6, 7).

3. Monitoring module (4) according to Claim 1 or 2, **characterized in that** the monitoring module (4) is designed to perform manual predefinition (5) and/or automatic predefinition of the basic states of the monitoring scene and/or of the fixed and/or quasi-fixed regions or objects.

4. Monitoring module (4) according to one of the preceding claims, **characterized in that** the deviation from the predefined basic state comprises a change in a usual state of one of the regions and/or of one of the objects in the scene background into an unusual state.

5. Monitoring module (4) according to one of the preceding claims, **characterized in that** the examination of the deviation of the basic state is carried out by means of a content analysis of the object and/or of the region (6, 7).

6. Monitoring module (4) according to one of the preceding claims, **characterized in that** the examination of the deviation of the basic state is carried out by determining the position of the object and/or of the region (6, 7).

7. Monitoring module (4) according to one of the preceding claims, **characterized in that** the examination of the deviation of the basic state is carried out by means of the chronological and/or statistical behaviour of the object and/or of the region (6, 7).

8. Monitoring module according to one of the preceding claims, **characterized in that** the operating state and/or the deviation relates to one of the following situations:
- change in state of functional elements of a building or of a fitting, in particular windows or doors (6, 7);
- existence of interfering objects in prohibited regions (11) and/or prohibited areas, in particular on escape routes;
- existence of light sources in prohibited regions and/or prohibited areas; and
- existence of unusual states of regions, in particular for warning of storms, detecting destruction and/or warning of an ingress of water.

9. Method for monitoring a monitored region, in particular a building or building complex, having a monitoring module (4) of a video monitoring system (1), wherein the state of the monitored region, in particular the structural state and/or the functional state of functional components and/or components of the monitored region, is monitored visually, **characterized in that** the monitoring module (4) is embodied according to one of the preceding claims.

10. Computer program having program code means for carrying out all the steps of the method according to Claim 9 when the program is executed on a computer and/or a monitoring module (4) in any of Claims 1 to 8.

## Revendications

1. Module de surveillance (4) pour un système de vidéosurveillance (1), le module de surveillance (4) pouvant être connecté et/ou étant connecté par une liaison de données avec au moins une caméra de surveillance (2),
l'au moins une caméra de surveillance (2) étant dirigée sur une zone de surveillance et la zone de surveillance pouvant être représentée ou étant représentée sous la forme d'une scène surveillée qui englobe ou peut englober des objets en mouvement au premier plan et un arrière-plan de scène,
et le module de surveillance (4) étant configuré pour analyser la scène surveillée et pour délivrer un signal en se basant sur l'analyse,
**caractérisé en ce que**
la délivrance du signal s'effectue en se basant sur l'analyse de l'arrière-plan de scène pour y détecter d'éventuels écarts par rapport aux états de base prédéfinis,
l'écart par rapport à l'état de base prédéfini comprenant une modification d'un premier état opérationnel (8) normal de l'une des zones et/ou de l'un des objets (6, 7) dans l'arrière-plan de scène, dans un deuxième état opérationnel (9) normal.

2. Module de surveillance (4) selon la revendication 1, **caractérisé en ce que** l'arrière-plan de scène est formé par des zones et/ou des objets (6, 7) fixes et quasi-fixes, le module de surveillance (4) étant configuré pour analyser les zones et/ou les objets (6, 7) fixes et quasi-fixes.

3. Module de surveillance (4) selon la revendication 1 ou 2, **caractérisé en ce que** le module de surveillance (4) est configuré pour une prédéfinition manuelle (5) et/ou automatique des états de base de la scène surveillée et/ou des zones et/ou des objets fixes et quasi-fixes.

4. Module de surveillance (4) selon l'une des revendications précédentes, **caractérisé en ce que** l'écart par rapport à l'état de base prédéfini comprend une modification d'un état normal de l'une des zones et/ou de l'un des objets de l'arrière-plan de scène dans un état anormal.

5. Module de surveillance (4) selon l'une des revendications précédentes, **caractérisé en ce que** l'analyse de l'écart de l'état de base s'effectue par le biais d'une analyse de l'objet et/ou de la zone (6, 7).

6. Module de surveillance (4) selon l'une des revendications précédentes, **caractérisé en ce que** l'analyse de l'écart de l'état de base s'effectue par le biais d'une détermination de la position de l'objet et/ou de la zone (6, 7).

7. Module de surveillance (4) selon l'une des revendications précédentes, **caractérisé en ce que** l'analyse de l'écart de l'état de base s'effectue par le biais du comportement dans le temps et/ou statistique de l'objet et/ou de la zone (6, 7).

8. Module de surveillance selon l'une des revendications précédentes, **caractérisé en ce que** l'état opérationnel et/ou l'écart concerne l'une des situations suivantes :
- modification de l'état des éléments fonctionnels d'un bâtiment ou d'un équipement, notamment des fenêtres ou des portes (6, 7) ;
- existence d'objets parasites sur les zones (11) et/ou les surfaces fermées, notamment sur les chemins de fuite ;
- existence de sources de lumière dans les zones et/ou les surfaces fermées ;
- existence d'état anormaux de zones, notamment d'alerte tempête, de détection de destruction et/ou d'alerte de pénétration d'eau.

9. Procédé de contrôle d'une zone de surveillance, notamment d'un bâtiment ou d'un complexe de bâtiments, comprenant un module de surveillance (4) d'un système de vidéosurveillance (1), l'état de la zone de surveillance, notamment l'état architectural et/ou l'état fonctionnel des composants fonctionnels et/ou des éléments de construction de la zone de surveillance étant surveillé visuellement, **caractérisé en ce que** le module de surveillance (4) est réalisé selon l'une des revendications précédentes.

10. Programme informatique comprenant des moyens de code de programme pour exécuter toutes les étapes du procédé selon la revendication 9 lorsque le programme est exécuté sur un ordinateur et/ou sur un module de surveillance (4) selon l'une quelconque des revendications 1 à 8.
